# EUROPEAN PATENT SPECIFICATION

(11) **EP 2 122 192 B1**
(45) Date of publication and mention of the grant of the patent: **05.09.2018**
(21) Application number: 08704868.2
(22) Date of filing: 18.01.2008
(51) Int. Cl.: F16F 3/04, A41D 31/00, F16F 1/04

(54) **COIL SPRING HAVING TWO-WAY SHAPE MEMORY EFFECT AND THE FABRICATION METHOD THEREOF, AND ADIABATIC PRODUCT USING THE SAME**
SCHRAUBENFEDER MIT ZWEIWEGE-FORMGEDÄCHTNISWIRKUNG UND HERSTELLUNGSVERFAHREN DAFÜR SOWIE DIESE VERWENDENDES ADIABATISCHES PRODUKT
RESSORT HÉLICOÏDAL À DOUBLE EFFET DE MÉMOIRE DE FORME ET PROCÉDÉ DE FABRICATION ASSOCIÉ, ET PRODUIT ADIABATIQUE DOTÉ DE CE RESSORT HÉLICOÏDAL

(30) Priority: 19.01.2007 KR 20070006269; 17.01.2008 KR 20080005446
(43) Date of publication of application: 25.11.2009
(73) Proprietor: Korea Institute of Science and Technology, Seoul 136-791 (KR); Industry-Academic Cooperation Foundation, Yonsei University, Seodaemun-gu Seoul 120-749 (KR)
(72) Inventor: JEE, Kwang-Koo, Seoul 135-778 (KR); KIM, Yoon-Bae, Seoul 137-070 (KR); KIM, Eun-Ae, Seoul 158-055 (KR); YOO, Shin-Jung, Gyeonggi-do 463-727 (KR)
(74) Representative: Kampfenkel, Klaus
(86) International application number: PCT/KR2008/000336
(87) International publication number: WO 2008/088197

(56) References cited:
- JP-A- H0 192 406
- JP-A- 01 092 406
- JP-A- 03 166 347
- JP-A- 60 169 551
- JP-A- S59 162 262
- US-A- 4 531 988
- US-A- 4 919 177
- US-B2- 6 682 521
- US-B2- 6 682 521

## Description

### TECHNICAL FIELD

The present invention relates to a coil spring having a two-way shape memory effect, a fabrication method thereof, and an adiabatic product using the same, and more particularly, to a coil spring implementing a two-way shape memory effect by using precipitates oriented in a particular direction, a fabrication method thereof, and an adiabatic product having an excellent adiabatic properties and being easy to fabricate, using the same.

### BACKGROUND ART

JP S 59-162262 A which is considered to be the closest prior art, shows a two-way shape memory spring consisting of a Ti-Ni alloy and being of a coil spring shape. The fabrication method includes heat-treating at ≥600°C with the coil elements being in a tight contact state, and an aging treatment at ≤600°C when the spring is in an extended state. The spring is extended at 60°C and contracted at 30°C.

US 6,682,521 B2 shows a shape memory material activated device comprising a shell containing a substance, and a shape memory material spring within the shell. When the spring temperature is above a predetermined temperature, the spring extends and creates a path through the shell converting the shell wall to a permeable wall.

JP H01-92406 A discloses warmth retaining clothes enclosing between to fabrics a shape memorizing alloy member in a conical spiral shape. When the temperature is at ≤8°C, the conical spiral shape extends to 5cm height, and when the temperature is above a predetermined temperature the shape memorizing alloy member takes a flat shape.

In general, industrial safety-related products such as heatproof clothing guarantee the safety for a wearer by generating and adiabatic effect under external conditions of high temperature. For such adiabatic effect, there is a widely used method which, when the temperature increases, increases the size of a layer of air between inner and outer cloths of the heatproof clothing.

Currently, in order to generate such an adiabatic effect, a bimetal using a difference in thermal expansion of metals has been widely used. However, the bimetal is not much effective considering its small displacement according to temperature increase.

Meanwhile, a shape memory alloy (SMA) has many merits in that it has a good recovery force accompanied by a shape memory, and is excellent for repetitive usage. However, there are still some obstacles that must be overcome in order to be actually applied in industrial fields. Such SMAs generally employ a coil spring shape so as to increase the displacement, and performance including the displacement caused by temperature change according to different fabrication methods, etc. may be greatly different.

Accordingly, a method may be considered for enhancing the adiabatic performance by applying this SMA to adiabatic products such as the heatproof clothing. However, no such attempt has been made.

### DISCLOSURE OF THE INVENTION

### Technical Problem

To overcome these problems and in accordance with the purpose of the present invention, as embodied and broadly described herein, there are provided
1) a coil spring having a two-way shape memory effect, and having a large displacement difference between below and above phase transformation temperatures, and a fabrication method thereof, and
2) an adiabatic product which has an excellent adiabatic performance and inexpensive fabrication cost, thereby being easily applied industrially.

### Technical Solution

To achieve these and other advantages and in accordance with an aspect of the present invention, there are provided
1) a coil spring having a two-way shape memory effect, which has a coil shape, and is made of an SMA (shape memory alloy) material, and shows two-way shape memory effect by containing precipitates oriented in a certain direction.
2) A fabrication method of a coil spring having a two-way shape memory effect, including:
   forming a coil spring by winding a wire rod formed of a shape memory alloy so as to closely contact coil elements with each other; performing a solution treatment on the coil spring at 600 - 1200°C and then quenching; and forming precipitates oriented in a certain direction through aging at 350 - 600°C while the coil spring is in an expanded state.
3) An adiabatic product using a shape memory alloy, including:
   first and second members; and a coil spring interposed between the two members, and having a coil shape, being formed of an SMA (shape memory alloy) material, and exhibiting two-way shape memory effect by containing precipitates oriented in a certain direction.

### Effect of the Invention

The present invention provides a coil spring which can implement two-way shape memory effect by generating precipitates having a certain directional orientation in an SMA coil spring by using a simple and inexpensive manner, and have a large displacement between above and below transformation temperatures.

When this coil spring is applied to adiabatic products such as heatproof clothing, due to the large displacement, a layer of air between the inner and outer sides of the clothing can be increased, thus making it possible to fabricate heatproof clothing having an excellent adiabatic effect.

### BRIEF DESCRIPTION OF THE DRAWINGS

Figure 1 is a schematic view illustrating the control of the distance between two members by using a coil spring showing two-way shape memory effect according to the present invention;
Figure 2 illustrates a conventional art method for implementing two-way shape memory effect;
Figure 3 illustrates the conventional art method for implementing the two-way shape memory effect; and
Figure 4 illustrates an operational principle of a coil spring showing two-way shape memory effect according to the present invention.

### MODES FOR CARRYING OUT THE PREFERRED EMBODIMENTS

Description will now be given in detail of the preferred embodiments of the present invention, examples of which are illustrated in the accompanying drawings.

The present invention is to provide a coil spring which has two-way shape memory effect and has a large displacement between before and after transformation temperatures by using an SMA (Shape Memory Alloy). And, such coil spring may be applied to adiabatic products such as heatproof clothing.

SMAs have a good recovery force accompanied by a shape memory, and are excellent for repetitive usage. However, there are still some obstacles which must be overcome in order to be actually applicable in industrial fields. Such an SMA employs a coil spring shape for a large displacement. Displacement due to a temperature change may vary greatly depending upon the fabrication method, and the like.

For commercial application of an SMA, the following three characteristics are required. First, displacement according to temperature change should be large. If the displacement according to temperature change is large, the amount of alloy to be used could be small, thereby being economical and light in weight for a product. Second, the fabrication method should be simple, which relates to the unit cost. Third, it is preferable that the coil spring should have the shortest length at low temperatures, and with the coil elements contacting as closely as possible, thus to maximize the expanding effect caused by a temperature increase.

As fabricated, an SMA is deformed at low temperature and is returned to its original state when heated. If it is cooled again, there is generally no shape change. This is called the "one-way shape memory effect." Meanwhile, the ability of an SMA to change its shape by memorizing both a higher temperature form and a lower temperature form is known as the "two-way shape memory effect" or the "reversible shape memory effect."

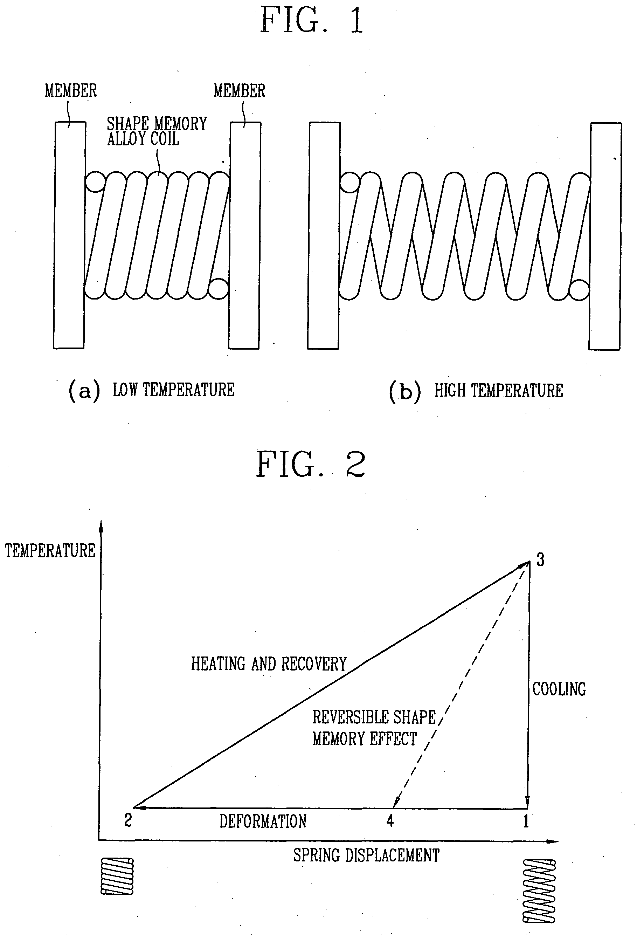

The present invention, as shown in Fig. 1, provides an adiabatic product which maximizes a displacement between two members according to a temperature change, by using a two-way shape memory effect of an SMA which memorizes both a closed shape (a) at low temperatures and an expanded shape (b) at high temperatures.

There are several methods known to generate the two-way shape memory effect in an SMA.

As the most widely used method, if a process of 'cooling-deformation-heating' is repeated, the two-way shape memory effect can be achieved with relative ease. Figure 2 illustrates a fabrication method for an SMA spring operating in two ways of being expanded at high temperature and being contracted at low temperature. First, an expanded SMA spring is fabricated (state 1). Then, the expanded spring is contracted at low temperature (from state 1 to state 2). The contracted spring is expanded when heated (from state 2 to state 3). And, the expanded spring is cooled again (from state 3 to state 2). The expansion by heating and contraction by low temperatures are repeated (to and from states 2 and 3). The resultant two-way memory effect is shown by the dashed line in Fig. 2.

However, there are three problems for this method to be applied. First, in order to increase the two-way memory shape effect, the degree of deformation needs to be large when the coil spring is contracted at low temperature. But, it is contracted by only as much as the coil elements are closely contacted to each other, thereby not effectively. Second, the spring is greatly expanded even at low temperatures, thereby reducing operational efficiency. That is, referring to Fig. 2, when the spring is contracted at low temperature, contraction occurs only up to the dashed arrow (state 4). Third, it costs a great deal to repeat the process of the 'cooling-deformation-heating' for several tens to several hundreds times.

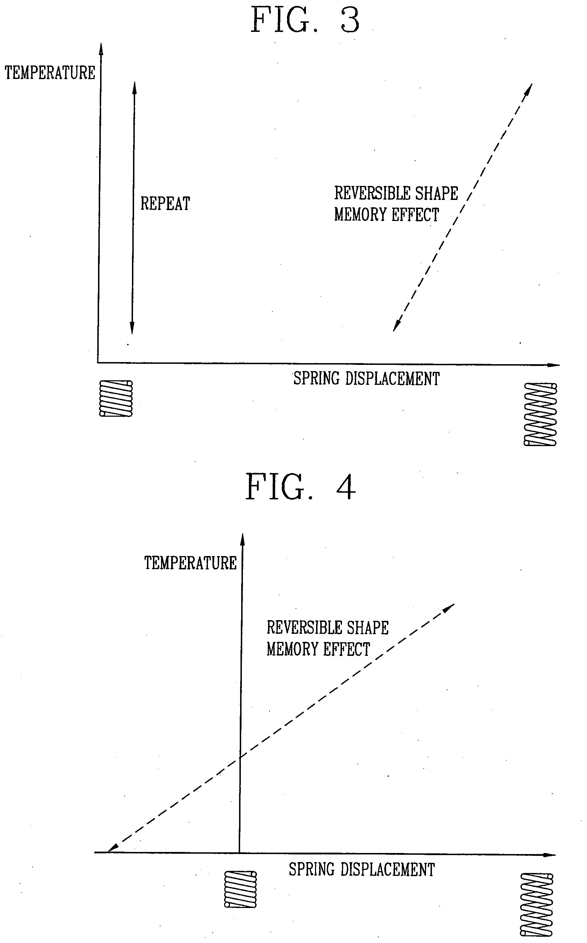

Meanwhile, there is another method to implement the two-way shape memory effect. As shown in Fig. 3, this method is characterized in that, after an initially expanded spring is contracted, in a closed state, heating and cooling are repeated at a temperature above or below the transformation temperature. The resultant two-way memory effect is shown by the dashed line in the drawing. However, this method also has the same problem as above-mentioned.

The present invention provides a method for processing the two-way shape memory effect which overcomes the above-mentioned problems. According to the present invention, a spring is contracted at low temperature, and the spring is greatly expanded when the temperature increases. Then, when the spring is cooled, it is contracted again to be closed, thus to implement the two-way shape memory effect. Such method facilitates a fabrication process and requires an inexpensive unit cost.

The present invention is well applied to a Ni-Ti based alloy among other various types of shape memory alloys. In Ni-Ti based alloys, Ni₄Ti₃ precipitates serve to generate the two-way shape memory effect. In order to generate such precipitates, an alloy composed of 50.2 ∼ 52.0 at% of Ni among Ni-Ti should be used. If the composition ratio of Ni is less than 50.2 at%, precipitates are not generated, thereby not achieving the two-way effect. If the composition ratio of Ni is more than 52.0 at%, a processing to fabricate a wire rod becomes very difficult. Here, inevitable impurities may be included in the alloy composition, however, it does not greatly affect the effects of the present invention.

A process of implementing the two-way shape memory effect using precipitates is as follows:
First, the coil spring, in a contracted state, undergoes a solution treatment at 600∼1200 °C and quenching. Next, in a state that the coil spring is back in an expanded state, an aging process is undergone at 350∼600°C so as to generate precipitates. If the aging process is performed while the spring is in the expanded state, an external stress is applied thereto, thus to generate precipitates in a certain direction. Here, although depending upon the alloy composition and temperature, precipitates amounting to more than 0 and less than 15 vol% of the total alloy composition are generated. Originally, the precipitates may have four different orientations (e.g., orientations of [111], [-111], [1-11], [11-1] of a certain grain. Here, the symbol "-" indicates a minus sign in Miller indices). If there is no stress during aging, almost the same amount of precipitates is generated in four orientations, thereby not generating any shape change when cooling. But, if stress is applied, the precipitates are generated in only one of the four orientations (e. g., precipitates in the [111] orientation in the grain), thereby generating a shape change when cooling. When the precipitates are generated in a certain orientation, martensite of the certain orientation (one of 12 orientations) is preferentially generated. Accordingly, a two-way shape memory effect is expressed and exhibits the behavior shown in Fig. 4. At higher temperatures, the spring is expanded. When the temperature decreases, the spring is contracted. Even after the spring is fully closed, it attempts to contract to a minus state. However, it cannot be further contracted, thus maintaining the fully closed state.

### Spring Displacement Test

### 1. Comparison Example 1

A wire rod having a diameter of 1.0mm and composed of 50.7Ni-Ti was wound 10 times around a bar having a diameter of 19mm, with an interval of 12.5mm between coil elements. Then, the wire rod wound on the bar was heated at 450°C for 2 hours, thereby memorizing a shape, thus to fabricate a spring. Applying the principle in Fig. 2, the spring was compressed to be deformed at -10°C and then restored when heated at 60°C. Such process was repeated 50 times. (Sample A)

### 2. Comparison Example 2

A wire rod having a diameter of 1.0mm and composed of 50.7Ni-Ti was wound 10 times around a bar having a diameter of 19mm, with an interval of 12.5mm between coil elements. Then, the wire rod wound on the bar was heated at 450°C for 2 hours, thereby memorizing a shape, thus to manufacture a spring. Applying the principle in Fig. 3, the spring was compressed at -10°C and, in a compressed state, was heated at 60°C and cooled at -10°C. Such process was repeated 50 times. (Sample B)

### 3. Example

A wire rod having a diameter of 1.0mm and composed of 50.7Ni-Ti was wound 10 times around a bar having a diameter of 19mm, with the windings closely contacting each other. Then, the wire rod underwent a solution treatment at 800°C for 30 minutes, and then was water-cooled. The water cooling was performed up to a temperature below room temperature. The wire rod was expanded to have an interval of 12.5mm between the windings. Then, the wire rod was compressed, and was aged at 450°C for 2 hours (Sample C).

Table 1 shows the results of the spring length of each sample respectively measured at 60°C and -10°C.

**[Table 1] Comparison of spring length according to temperature in each process**

| sample | low temperature (mm) | high temperature (mm) |
|---|---|---|
| A | 125 | 132 |
| B | 119 | 134 |
| C | 10 | 115 |

Sample A exhibited a slight change of 7mm in length according to the temperature change. This is because the degree of deformation necessary to be compressed was small. Sample B exhibited a difference of 15mm in length. Sample C exhibited a large degree of deformation of 105mm, and also, is in a closed state at low temperature (the diameter of the winding was 1mm and the windings were wound 10 times, thus to be 10mm in a closed state). Accordingly, Sample C had a very appropriate property for use. In addition, Samples A and B were obtained by repetitive treatments. On the contrary, Sample C was obtained by only one thermal treatment, thereby having an excellent productivity.

### Radiant Heat Test

The heat protection effect of the conventional heatproof clothing (firefighters' clothing) and the SMA heatproof clothing fabricated according to the present invention were compared to each other. In the conventional heatproof clothing, a felt material is filled as an insulator between the inner and outer sides of the clothing. In the SMA heatproof clothing, the SMA coil is installed between the inner and outer sides of the clothing. The coil is fabricated such that It has a length of 7mm at low temperature when contracted, and has a length of 36mm when expanded at a temperature higher than 45°C. A radiant heat test was performed with equipment made by the Korea Apparel Testing & Research Institute (KATRI). The time respectively taken to increase to 12°C and 24°C from a radiant heat of 1200°C was measured.

**[Table 2] Radiant heat test result**

| Sample | time taken to increase to 12°C | time taken to increased to 24°C |
|---|---|---|
| conventional heatproof clothing | 29 sec. | 46 sec. |
| SMA heatproof clothing | 38.7 sec. | 50.8 sec. |

Through this test, it could be observed that the SMA heatproof clothing has excellent heat protection performance, compared to the conventional heatproof clothing.

The foregoing embodiments and advantages are merely exemplary and are not to be construed as limiting the present invention. Many alternatives, modifications, and variations will be apparent to those skilled in the art.

## Claims

1. A fabrication method of a coil spring having two-way shape memory effect, comprising:
forming a coil spring by winding a wire rod formed of a shape memory alloy so as to closely contact coil elements with each other;
performing a solution treatment on the coil spring at 600 - 1200 °C and then quenching; and **characterized in that** it comprises forming precipitates oriented in a certain direction through aging at 350 - 600 °C while the coil spring is in an expanded state and an external stress is applied to the coil spring.

2. A coil spring having two-way shape memory effect, obtainable by a fabrication method according to claim 1, which has a coil shape and is made of an SMA (shape memory alloy) material and **characterized in that** it shows two-way shape memory effect by containing precipitates oriented in a certain direction.

3. The coil spring of claim 2, wherein the shape memory alloy is composed of 50.2∼52.0 at% of Ni, and the rest of Ti and other inevitable impurities.

4. The coil spring of claim 3, wherein the precipitates are Ni₄Ti₃ precipitates having a certain orientation.

5. An adiabatic product using a shape memory alloy, comprising:
first and second members; and
a coil spring according to claim 2 interposed between the two members, having a coil shape, being made of an SMA (shape memory alloy) material, and showing two-way shape memory effect by containing precipitates oriented in a certain direction.

6. The adiabatic product of claim 5, wherein the adiabatic product is fireproof clothing, and the first and second members are respectively inner and outer cloths of the fireproof clothing.

## Patentansprüche

1. Verfahren zur Herstellung einer Schraubenfeder mit Zweiwege-Formgedächtniswirkung, umfassend:
Ausbilden einer Schraubenfeder durch Aufwickeln eines Walzdrahts, der aus einer Formgedächtnislegierung ausgebildet ist, in solcher Weise, dass die Wendelelemente engen Kontakt zueinander haben;
Ausführen einer Lösungsbehandlung an der Schraubenfeder bei 600 - 1200 °C und danach Abschrecken; und
**dadurch gekennzeichnet, dass** dies Folgendes beinhaltet:
Ausbilden von Ausfällungen, die in einer bestimmten Richtung ausgerichtet sind, durch Altern bei 350 bis 600 °C, während sich die Schraubenfeder in einem ausgedehnten Zustand befindet und eine äußere Spannung auf die Schraubenfeder ausgeübt wird.

2. Schraubenfeder mit Zweiwege-Formgedächtniswirkung, herstellbar durch ein Herstellungsverfahren nach Anspruch 1, wobei diese eine Spiralform aufweist und aus einem SMA-Material (Formgedächtnislegierung) hergestellt ist und **dadurch gekennzeichnet ist, dass** sie eine Zweiwege-Formgedächtniswirkung zeigt, indem sie Ausfällungen enthält, die in einer bestimmten Richtung ausgerichtet sind.

3. Schraubenfeder nach Anspruch 2, wobei die Formgedächtnislegierung aus 50,2 bis 52,0 Atomprozent Ni und der Rest aus Ti sowie anderen unvermeidbaren Verunreinigungen besteht.

4. Schraubenfeder nach Anspruch 3, wobei die Ausfällungen Ni₄Ti₃-Ausfällungen mit einer bestimmten Ausrichtung sind.

5. Adiabatisches Produkt, bei dem eine
Formgedächtnislegierung verwendet wird, mit:
einem ersten und einem zweiten Element; und
einer Schraubenfeder nach Anspruch 2, die zwischen den beiden Elementen angeordnet ist und eine Spiralform aufweist, wobei sie aus SMA-Material (Formgedächtnislegierung) besteht und eine Zweiwege-Formgedächtniswirkung zeigt, indem sie Ausfällungen enthält, die in einer bestimmten Richtung ausgerichtet sind.

6. Adiabatisches Produkt nach Anspruch 5, wobei das adiabatische Produkt feuerfeste Kleidung ist und das erste sowie das zweite Element eine innere beziehungsweise äußere Stofflage der feuerfesten Kleidung darstellen.

## Revendications

1. Procédé de fabrication d'un ressort hélicoïdal à double effet de mémoire de forme, consistant à :
former un ressort hélicoïdal en enroulant un fil machine formé d'un alliage à mémoire de forme de façon que les éléments de la bobine soient en contact étroit les uns avec les autres ;
effectuer un traitement en solution sur le ressort hélicoïdal à 600 - 1200°C, puis une trempe ; et
**caractérisé en ce qu'**il consiste à former des précipités orientés dans une certaine direction par vieillissement à 350 - 600°C alors que le ressort hélicoïdal est dans un état dilaté et qu'une contrainte externe est appliquée au ressort hélicoïdal.

2. Ressort hélicoïdal à double effet de mémoire de forme, pouvant être obtenu par un procédé de fabrication selon la revendication 1, qui présente une forme de bobine et est constitué d'un matériau SMA (alliage à mémoire de forme), et **caractérisé en ce qu'**il présente un double effet de mémoire de forme du fait qu'il contient des précipités orientés dans une certaine direction.

3. Ressort hélicoïdal selon la revendication 2, dans lequel l'alliage à mémoire de forme est composé de 50,2∼52,0 % atomique de Ni, le reste étant constitué de Ti et d'autres impuretés inévitables.

4. Ressort hélicoïdal selon la revendication 3, dans lequel les précipités sont des précipités de Ni₄Ti₃ présentant une certaine orientation.

5. Produit adiabatique utilisant un alliage à mémoire de forme, comprenant :
des premier et deuxième éléments ; et
un ressort hélicoïdal selon la revendication 2 interposé entre les deux éléments, présentant une forme de bobine, constitué d'un matériau SMA (alliage à mémoire de forme), et présentant un double effet de mémoire de forme du fait qu'il contient des précipités orientés dans une certaine direction.

6. Produit adiabatique selon la revendication 5, le produit adiabatique étant un vêtement ignifuge, et les premier et deuxième éléments étant respectivement des tissus intérieurs et extérieurs du vêtement ignifuge.
